# NOUVEAU FASCICULE DE BREVET EUROPEEN

(11) **EP 0 173 607 B2**
(45) Date de publication et mention de la décision concernant l'opposition: **18.08.1993**
(45) Mention de la délivrance du brevet: 04.01.1989
(21) Numéro de dépôt: 85401510.4
(22) Date de dépôt: 22.07.1985
(51) Int. Cl.: F16C 19/46, F16C 33/78

(54) **Roulement à aiguilles, notamment douille à aiguilles à étanchéité renforcée**
Nadellager, insbesondere Hülsenadellager mit verstärkter Dichtung
Needle bearing, especially a sleeve needle bearing with improved sealing means

(30) Priorité: 30.07.1984 FR 8412083
(43) Date de publication de la demande: 05.03.1986
(73) Titulaire: NADELLA, F-18102 Vierzon Cédex (FR)
(72) Inventeur: Labedan, Jean-Denis, F-18100 Vierzon (FR); Stephan, Gérard, F-78290 Croissy-Sur-Seine (FR)
(74) Mandataire: Bressand, Georges

(56) Documents cités:
- DE-A- 1 942 659
- FR-A- 2 506 869
- US-A- 3 404 926

## Description

La présente invention est relative aux roulements à aiguilles et se rapporte plus particulièrement à des douilles à aiguilles à étanchéité renforcée.

Une douille à aiguilles est généralement constituée d'une couronne d'aiguilles disposées dans une cage, montée dans une douille dont la surface interne forme la piste de roulement extérieure de l'ensemble.

A l'intérieur de la couronne d'aiguilles est monté à rotation un arbre.

Des problèmes d'étanchéité d'une telle douille à aiguilles se posent aux extrémités de la douille formant la piste de roulement extérieure, surtout dans certaines applications où l'arbre est en outre animé d'un mouvement axial de faible amplitude, de l'ordre de 1 à 2 mm par exemple.

Des tentatives de solutions ont été apportées par la technique antérieure. La demande de brevet DE-A-1 942 659 concerne un dispositif d'étanchéité amovible destiné à être monté sur un arbre fixe. Ce dispositif comprend un joint en élastomère pourvu d'une lèvre principale soumise à l'action d'un ressort pourem- pêcher les fuites d'huile, et éventuellement, d'une lèvre secondaire pour interdire la pénétration de saletés.

Le brevet US-A-3 404 926 concerne un roulement à aiguilles à dispositif d'étanchéité incorporé. Ce dispositif comprend un joint en élastomère avec un manchon emmanché à force sur un arbre et une lèvre unique qui porte sur une surface perpendiculaire à l'axe de rotation d'une gorge ménagée dans la bague extérieure.

Aucune de ces solutions n'assure une étanchéité renforcée ni ne permet des déplacements axiaux relatifs de petite amplitude.

L'invention vise à créer une douille à aiguilles pourvue de moyens d'étanchéité efficaces, même lorsque la douille ou bague extérieure et l'arbre sont animés de mouvements relatifs axiaux.

L'invention a pour objet un roulement à aiguilles, notamment une douille à aiguilles du type exposé dans le préambule de la revendication principale, dont les particularités sont indiquées dans la partie caractérisante de la revendication 1.

L'invention sera mieux comprise à l'aide de la description qui va suivre, donnée uniquement à titre d'exemple et faite en se référant aux dessins annexés sur lesquels :
- la Fig. 1 est une vue partielle en élévation et en coupe d'une douille à aiguilles selon un premier mode de réalisation de l'invention; et
- la Fig. 2 est une vue partielle en élévation et en coupe d'un second mode de réalisation de la douille à aiguilles suivant l'invention.

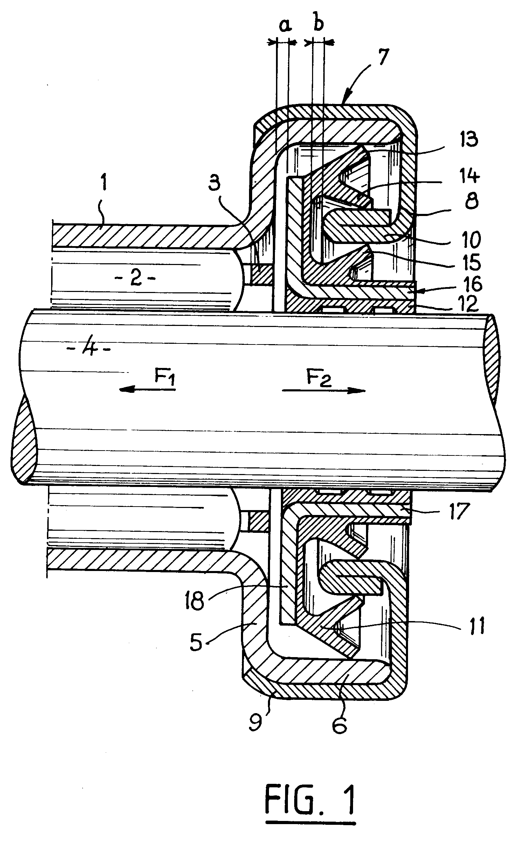

La douille à aiguilles représentée à la Fig. 1 comporte une bague extérieure 1 dans laquelle est montée une couronne d'aiguilles 2 disposées dans une cage 3. La couronne d'aiguilles peut également être formée d'aiguilles jointives sans cage.

La surface interne de la bague constitue la piste de roulement extérieure pour les aiguilles 2 et un arbre 4 est monté à rotation à l'intérieur de la couronne d'aiguilles.

L'arbre 4 est en outre animé d'un mouvement axial de faible amplitude de l'ordre de 1 à 2 mm par exemple.

A l'une de ses extrémités, la bague extérieure 1 comporte une collerette 5 à rebord axial 6 qui s'étend en direction axiale au-delà des aiguilles 2 et de la cage 3.

Sur le rebord axial 6 est fixée par sertissage une pièce rapportée annulaire 7 pourvue d'une portion radiale 8 en forme de bague, d'une portion axiale extérieure 9 par laquelle elle est fixée au rebord 6 de la collerette 5 et d'une portion axiale intérieure 10 à extrémité rabattue sur elle-même.

Dans les espaces délimités entre le rebord axial 6 de la collerette 5 et la partie axiale intérieure 10 de la pièce rapportée 7 d'une part et entre cette partie axiale 10 et l'arbre 4 d'autre part est interposé un joint d'étanchéité 11.

Ce joint 11 est formé d'une pièce en élastomère pourvue d'un manchon central 12 monté serré sur l'arbre 4 et de trois lèvres périphériques axiales 13, 14 et 15 en contact respectivement avec la surface intérieure du rebord axial 6 de la collerette 5, la surface extérieure de la partie axiale intérieure 10 de la pièce rapportée 7 et la surface intérieure de cette partie intérieure 10.

Le triple joint est renforcé par une armature 16 formée d'une virole 17 noyée dans la matière du manchon en élastomère 12 et d'une collerette radiale 18.

L'armature 16 est fixée au joint par exemple par adhérisation.

En fonctionnement, la partie joint est immobilisée par rapport à l'arbre 4 par serrage du manchon en élastomère 12.

La possibilité de déplacement axial de l'ensemble ainsi défini est égale à la somme des distances a et b respectivement entre la collerette 5 de la douille 1 et la face de la collerette 18 de l'armature 16 située en regard de celle-ci et entre la face opposée de ladite collerette 18 et l'extrémité de la partie intérieure axiale 10 de la pièce rapportée 7.

Lors de l'introduction de l'arbre 4 dans le roulement, l'ensemble du joint est entraîné par le serrage du manchon 12.

Si l'introduction a lieu dans le sens de la flèche F_{1'} le joint d'étanchéité vient buter par sa collerette contre la collerette 5 de la douille 1.

Si l'introduction a lieu dans le sens de la flèche F₂, le joint 11 vient buter par sa partie radiale contre l'extrémité de la partie intérieure axiale 10 de la pièce rapportée 7.

On voit donc que quel que soit le sens d'introduction de l'arbre dans le roulement les lèvres d'étanchéité 13, 14 et 15 ne risquent pas d'être détériorées au montage.

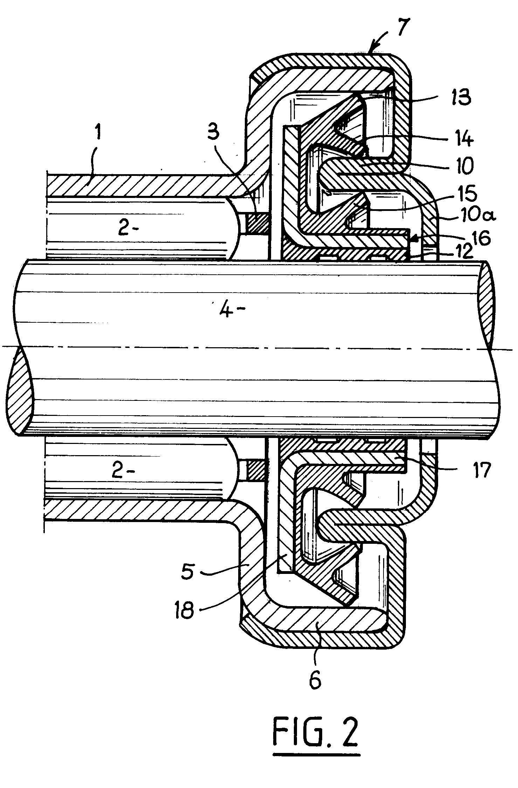

Sur la Fig. 2, on a représenté une douille à aiguilles qui constitue une variante de la douille à aiguilles de la Fig. 1.

Selon cette variante qui est semblable pratiquement en tous points à la douille de la Fig. 1 la pièce rapportée 7 comporte une partie radiale 10a prolongeant la partie intérieure axiale 10 et formant déflecteur de protection contre les projections de saletés.

On constate que l'agencement qui vient d'être décrit permet d'obtenir un roulement à aiguilles qui allie une bonne étanchéité à une possibilité de déplacement axial de l'arbre par rapport à la bague extérieure sans risque de détérioration des organes d'étanchéité.

Les modes de réalisation décrits en référence aux Fig. 1 et 2 sont des roulements dont la bague extérieure et la pièce rapportée sont réalisées par emboutissage.

L'invention s'applique également aux roulements massifs.

## Revendications

1. Roulement à aiguilles à moyens d'étanchéité incorporés, notamment douille à aiguilles comprenant une bague extérieure (1) à l'une des extrémités de laquelle sont montés des moyens d'étanchéité équipés d'un joint (11) en élastomère comportant un manchon (12) destiné à recevoir par emmanchement à force l'organe intérieur (4) du roulement, caractérisé en ce que ces moyens d'étanchéité sont constitués en outre d'une pièce annulaire (7) qui est est rapportée à cette bague extérieure (1) et qui définit une surface axiale périphérique de raccordement, une portion radiale (8) et une partie axiale (10) intérieure, en ce que le joint (11) logé dans la bague (1) entre les aiguilles et la pièce annulaire (7) comprend au moins deux lèvres, l'une en contact avec la surface axiale périphérique intérieure d'un rebord axial (6) prévu à au moins une extrémité de la bague extérieure et l'autre en contact avec ladite portion axiale intérieure (10) et en ce que cette portion axiale (10) constitue une butée vis-à-vis des déplacements relatifs axiaux de cette bague (1) et cet organe intérieur (4).

2. Roulement à aiguilles suivant la revendication 1, caractérisé en ce que le joint d'étanchéité (11) comporte autour dudit manchon (12) trois lèvres périphériques (13, 14, 15), deux lèvres étant en contact respectivement avec la surface extérieure et avec la surface intérieure de cette partie axiale intérieure (10).

3. Roulement à aiguilles suivant l'une des revendications 1 et 2, caractérisé en ce que la pièce rapportée (7) définissant cette partie axiale intérieure (10) est fixée par une partie axiale extérieure (9) à un rebord axial (6) venu de matière avec la bague extérieure (1 ).

4. Roulement à aiguilles suivant la revendication 3, caractérisé en ce que la partie intérieure axiale (10) de la pièce rapportée (7) est prolongée par une partie radiale (10a) formant déflecteur.

5. Roulement à aiguilles suivant l'une des revendications 1 à 4, caractérisé en ce que le joint (11) comporte une armature (16) formée d'une virole (17) noyée dans la matière du manchon (12) et d'une collerette (18) contre laquelle est appliquée la partie du joint pourvue des lèvres périphériques (13,14,15), l'armature (16) étant fixée audit joint par adhérisation.

6. Roulement à aiguilles suivant l'une des revendications 3 et 5, caractérisé en ce que la bague extérieure (1) et la pièce rapportée (7) sont réalisées par emboutissage ou sont constituées par des pièces massives usinées.

## Claims

1. Needle bearing with incorporated sealing means, and in particular a needle bush, comprising an outer ring (1) at one end of which are mounted sealing means equipped with an elastomer joint (11) including a sleeve (12) intended to receive, in a tight fit, the inner component (4) of the bearing, characterised in that these sealing means are also formed by an annular piece (7), which is attached to this outer ring (1) and which defines an axial, peripheral connection surface, a radial portion (8) and an inner axial part (10), in that the joint (11) housed in the ring (1) between the needles and the annular piece (7) comprises at least two lips, one in contact with the inner peripheral axial surface of an axial shoulder (6) provided at at least one end of the outer ring and the other in contact with the said inner axial portion and in that this axial portion (10) constitutes a stop with respect to relative axial displacements of this ring (1) and this inner component (4).

2. Needle bearing according to Claim 1, characterised in that the sealing joint (11) has, around the said sleeve (12), three peripheral lips (13,14,15), two lips being in contact respectively with the outer surface and inner surface of this inner axial part (10).

3. Needle bearing according to one of Claims 1 and 2, characterised in that the attached piece (7) defining this inner axial part (10) is fixed by means of an outer axial part (9) to an axial shoulder (6) made in one piece with the outer ring (1, 20).

4. Needle bearing according to Claim 3, characterised in that the inner axial part (10) of the attached piece (7) is extended by a radial part (10a) constituting a deflector.

5. Needle bearing according to one of Claims 1 to 4, characterised in that the joint (11) has a reinforcement (16) formed by a hoop (17) embedded in the material of the sleeve (12) and a flange (18) against which there is applied the part of the joint provided with the peripheral lips (13, 14, 15), the reinforcement (16) being fixed to the said seal by bonding.

6. Needle bearing according to either one of Claims 3 and 5, characterised in that the outer ring (1) and the attached piece (7) are made by a pressing operation or consist of solid machined parts.

## Patentansprüche

1. Nadellager mit eingebauten Dichtungseinrichtungen, insbesondere Hülsennadellager mit einem Außenring (1), an dessen einem Ende Dichtungseinrichtungen befestigt sind, die eine Dichtung (11) aus Elastomer aufweisen, die eine Manschette (12) besitzt, die auf das Innenorgan (4) des Lagers aufgepreßt werden soll,
dadurch gekennzeichnet, daß
die Dichtungseinrichtungen ferner aus einem ringförmigen Teil (7) bestehen, das an dem Außenring (1) befestigt ist und eine zur Verbindung dienende, axiale Umfangsfläche, einen radialen Teil (8) und einen inneren axialen Teil (10) bildet, daß die in dem Außenring (1) zwischen den Nadeln und dem ringförmigen Teil (7) sitzende Dichtung (11) mindestens zwei Lippen besitzt, von denen eine mit der axialen inneren Umfangsfläche eines an mindestens einem Ende des Außenrings vorgesehenen axial abgewinkelten Außenrands (6) in Kontakt ist und die andere mit dem inneren axialen Teil (10) in Kontakt ist, und daß der axiale Teil (10) einen Anschlag bezüglich der axialen Relativbewegung zwischen dem Außenring (1) und dem Innenorgan (4) bildet.

2. Nadellager nach Anspruch 1,
dadurch gekennzeichnet, daß
die Dichtung (11) drei die Manschette (12) umgebende, sich über den Umfang erstreckende Lippen (13, 14, 15) aufweist, von denen zwei mit der Außenfläche des inneren axialen Teils (10) bzw. mit dessen Innenfläche in Kontakt sind.

3. Nadellager nach einem der Ansprüche 1 - 2,
dadurch gekennzeichnet, daß
das angebrachte Teil (7), das den axialen inneren Teil (10) bildet, mit einem axialen Außenteil (9) an einem axialen Rand (6) befestigt ist, der mit dem Außenring (1) einstückig ausgeführt ist.

4. Nadellager nach Anspruch 3,
dadurch gekennzeichnet, daß
der innere axiale Teil (10) des angebrachten Teils (7) durch einen eine Schutzabdeckung bildenden radialen Teil (10a) verlängert ist.

5. Nadellager nach einem der Ansprüche 1 - 4,
dadurch gekennzeichnet, daß
die Dichtung (11) eine Einlage (16) besitzt, die aus einem in den Werkstoff der Manschette (12) eingebetteten Ring (17) und einem Flansch (18) besteht, an dem der mit den Umfangslippen (13, 14, 15) versehene Teil der Dichtung anliegt, wobei die Einlage (16) an der Dichtung durch Adhärisation befestigt ist.

6. Nadellager nach einem der vorhergehenden Ansprüche 3 bis 5,
dadurch gekennzeichnet, daß
der Außenring (1) und das angebrachte Teil (7) aus gezogenen bzw. gepreßten Teilen oder aus massiven bearbeiteten Teilen bestehen.
